Europäisches Patentamt

European Patent Office

Office européen des brevets

(19)

(11) Publication number: **0 023 802**
**B1**

## (12) EUROPEAN PATENT SPECIFICATION

(45) Date of publication of patent specification: **13.04.83**

(21) Application number: **80302520.4**

(22) Date of filing: **24.07.80**

(51) Int. Cl.³: **C 10 G 47/16,**
**C 10 G 69/06, B 01 J 29/30**

(54) Conversion of crude oil fractions to paraffins or olefins.

(30) Priority: **06.08.79 US 64461**

(43) Date of publication of application:
**11.02.81 Bulletin 81/6**

(45) Publication of the grant of the patent:
**13.04.83 Bulletin 83/15**

(84) Designated Contracting States:
**BE DE FR GB IT NL**

(56) References cited:
**EP - A - 0 014 291**
**BE - A - 630 101**
**FR - A - 2 340 365**
**US - A - 4 021 331**
**US - A - 4 141 860**

(73) Proprietor: **MOBIL OIL CORPORATION**
**150 East 42nd Street**
**New York New York 10017 (US)**

(72) Inventor: **La Pierre, Rene Bernard**
**53 Lyons Drive**
**Morrisville Pennsylvania (US)**
Inventor: **Weekman Jr., Vern William**
**204 Heritage Rd.**
**Cherry Hill New Jersey (US)**

(74) Representative: **Cooper, John Anthony**
**Mobil Court 3 Clements Inn**
**London WC2A 2EB (GB)**

Courier Press, Leamington Spa, England.

## Conversion of crude oil fractions to paraffins or olefins

This invention relates to catalytic conversion of C₅+hydrocarbon feeds or mixtures thereof (with or out of the presence of sulfur) to a $C_2$—$C_5$ paraffin stream which can be further thermally cracked to light olefins.

It is known from US—A—3,598,724 that $C_3$—$C_4$ paraffins can be produced from hydrocarbons boiling in the range from 37.8°C (100°F) to 287.8°C (550°F) by hydrocracking over a catalyst comprising mordenite mixed with a nickel/tin catalyst supported on an amorphous inorganic oxide. Similar Specifications, such as US—A—3,385,782, suggest the hydrocracking of high boiling hydrocarbon fractions into $C_1$—$C_4$ paraffins. These prior art processes, as well as US—A—3,718,575, are primarily concerned with the production of LPG or liquified petroleum gas ($C_3$—$C_4$) useful as fuels and thus concentrate mainly on producing higher yields of $C_3$—$C_4$ rather than $C_2$—$C_3$.

We have now found that the relatively new zeolite ZSM-20 is a useful hydrocracking catalyst component for the production of $C_2$—$C_5$ alkanes, from which $C_2$—$C_3$ olefins can conveniently be obtained by thermal cracking. ZSM-20 is described in US—A—3,972,983.

As mentioned in our prior European Application 79302894.5 (publication number 14291), when a hydrogenation component such as palladium is incorporated into zeolite ZSM-20 a catalyst is produced which has the ability to:

1) hydrogenate aromatic hydrocarbons at low pressure in the presence of sulfur (and nitrogen poisons)
2) convert sulfur- and nitrogen-containing poisons to $H_2S$ (and $NH_3$) and saturated hydrocarbons
3) hydrocrack hydrocarbon mixtures containing sulfur (and nitrogen poisons) to lower molecular weight mixtures while substantially improving the quality of the material remaining in the original boiling range of the hydrocarbon mixture.

It now has been discovered that by using such catalysts at higher temperatures it is possible to hydrocrack a crude oil fraction boiling in the range from 93.3°C (200°F) to 537.8°C (1000°F) with substantially complete conversion into a $C_2$—$C_5$ product having a normal paraffin to isoparaffin molar ratio ranging from about 3:1 to about 6:1. This stream may then be subsequently thermally cracked into a $C_2$—$C_3$ olefin mixture.

The advantage in having a high normal paraffin ratio in the $C_2$—$C_5$ product is that upon subsequent thermal cracking higher ethylene yields are obtained. A further advantage of the present invention is that whereas it is known to thermally crack gas oil to olefins in yields of 30—35 p.b.w. per 100 p.b.w. of feed, by using the present two-step invention (as defined in claim 2) it is possible to obtain yields of 50—60 p.b.w. per 100 p.b.w. of feed (p.b.w. designates parts by weight).

In general the present invention comprises a process for the production of light paraffins which comprises:

hydrocracking a crude oil fraction boiling in the range from 93°C (200°F) to 538°C (1000°F) by contacting a mixture of said fraction and hydrogen with a highly active sulfided hydrocracking catalyst under pressure greater than about 2859 kPa (400 psig) wherein:

1. the molar ratio of hydrogen to said fraction is in the range from about 4:1 to about 50:1;
2. the temperature range is from about 300° to about 565°C; and
3. the residence time is from about one to about 180 seconds;
4. the sulfided catalyst comprises a Group IIA or IIIB exchanged zeolite ZSM-20 and a hydrogenation component (platinum group metal);
5. the so-obtained hydrocracked product is separated to recover a $C_2$—$C_5$ alkane product.

The conditions (1)—(3) are selected so as to achieve a normal paraffin to isoparaffin molar ratio greater than about 3:1 in the hydrocracked product.

Optionally the $C_2$—$C_5$ product is thermally cracked and ethylene and propylene are recovered as coproducts.

Preferably, the crude oil fraction used is a gas oil fraction boiling in the range from 176.7°—426.7°C (350°—800°F) and preferably the molar ratio of hydrogen to the gas oil fraction is in the range from about 10:1 to about 30:1; the temperature range is from about 450° to about 550°C; and the residence time is from about 5 to about 50 seconds.

ZSM-20 is used in the Group IIA or IIIB—exchanged form, the magnesium form being especially effective. The preferred hydrogenation component is palladium.

Suitable charge stocks include diesel fuel, light gas oil, heavy gas oil, lube oil, catalytic cycle oil, and coke oven oil. The operating conditions under which the above catalysts are used in this invention for hydrocracking are a temperature range from 300° to 565°C and preferably 450° to 550°C, a residence time from 1 to 180 seconds and preferably 5—50 seconds, a range of hydrogen to hydrocarbon molar ratio to from 4:1 to 50:1 and preferably 10:1 to 30:1 and a pressure range from 2859.2 kPa (400 psig) to 13890.9 kPa (2000 psig) and preferably 3548.7—6306.6 kPa (500—900 psig).

It is to be understood that the conditions selected are chosen in order to insure that the hydrocarbon feed is completely converted to produce $C_2$—$C_5$ alkanes with a yield of 91—95% with only a 2—4% yield of methane and 1.7% yield of $C_8$—$C_9$ alkanes and with a normal paraffin to isoparaffin molar ratio greater than about 3:1.

As is known in the prior art, the catalyst may be sulfided by adding organic sulfur compounds to the feed material or the catalyst may be sulfided during its preparation.

The hydrocracked product can be fed to a thermal cracker operating under a temperature range from 800° to 925°C; a pressure range from 170.3 kPa (10 psig) to 308.2 kPa (30 psig); a residence time range from about 0.1 to 1.0 seconds and a steam/hydrocarbon ratio of 0.1 to 1.0 kg steam/kg hydrocarbon to produce an ethylene-propylene product.

The structure of zeolite ZSM-20 bears some relation to that of faujasite. However, in terms of mole ratios of oxides in the anhydrous state, it usually satisfies the following formula:

$$(0.3—0.6)R_2O: (0.4—0.7)M_2O: Al_2O_3: (x)SiO_2$$

wherein R is a tetraethylammonium cation, M is an alkalimetal cation and x is at least 7. In the as synthesized form, the zeolite usually has a formula, in terms of mole ratios of oxides and in the anhydrous state, as follows:

$$(0.3—0.6)R_2O: (0.4—0.7)M_2O: Al_2O_3: (7—10)SiO_2$$

wherein R is a tetraethylammonium cation, M is an alkali metal cation, especially sodium. The zeolite ZSM-20 crystal structure is comprised of relatively uniform rigid three-dimensional pore networks characterized by uniform pores of between $7 \times 10^{-10}$ and $8 \times 10^{-10}$ m (between 7 and 8 Angstrom units) in diameter.

The original cations of the "as synthesized" ZSM-20 can be replaced in accordance with techniques well known in the art, at least in part, by ion exchange with other cations. Preferred replacing cations have included metal ions, ammonium ions, hydrogen ions and mixtures thereof. Particularly preferred cations have been those which render the zeolite catalytically-active, especially for hydrocarbon conversion. These include hydrogen, hydrogen precursors (e.g. ammonium ions), rare earth metals, aluminium, metals of Groups IB, IIB, IIIB, IVB, VIB, IIA, IIIA, IVA and VIII of the Periodic Table of Elements.

The synthetic ZSM-20 zeolite possesses a definite distinguishing hexagonal crystalline structure whose X-ray diffraction pattern shows substantially the significant lines set forth in Table 1.

TABLE 1

| d $10^{-10}$m (A) | Relative intensities |
|---|---|
| 14.90±0.3 | VS |
| 14.21±0.3 | VS |
| 8.67±0.02 | M |
| 8.19±0.15 | W |
| 7.44±0.15 | M |
| 5.66±0.10 | S |
| 5.34±0.10 | W |
| 5.17±0.10 | W |
| 5.00±0.10 | W |
| 4.87±0.10 | W |
| 4.74±0.10 | W |
| 4.33±0.09 | M |
| 3.98±0.08 | W |
| 3.83±0.08 | W |
| 3.76±0.08 | M |
| 3.66±0.07 | S |
| 3.60±0.07 | W |
| 3.55±0.07 | W |
| 3.45±0.07 | W |
| 3.33±0.07 | W |
| 3.29±0.07 | M |
| 3.20±0.06 | W |
| 2.70±0.06 | M |
| 2.87±0.06 | W |
| 2.84±0.06 | M |
| 2.79±0.06 | W |
| 2.75±0.06 | W |
| 2.70±0.05 | W |
| 2.61±0.05 | M |
| 2.41±0.05 | W |
| 2.37±0.05 | W |
| 2.17±0.04 | W |
| 2.14±0.04 | W |
| 2.09±0.04 | W |
| 2.05±0.04 | W |

These values were determined by standard techniques. The radiation was the K-alpha doublet of copper, and a scintillation counter spectrometer with a strip chart pen recorder was used. The peak heights, I, and the position as a function of 2 times theta, where theta is the Bragg angle, were read from the spectrometer chart. From these, the relative intensities, 100 I/Io, where Io is the intensity of the strongest line or peak, and d(obs), the interplanar spacing in Angstroms (A), corresponding to the recorded lines, were calculated. In Table 1, relative intensities are listed according to the following symbol definitions: VS=very strong, S=strong, M=medium and W=weak. It should be understood that this X-ray diffraction pattern is characteristic of all the species of ZSM-20 compositions. Ion exchange of the sodium ion with cations reveals substantially the same pattern with some minor shifts in interplanar spacing and variation in relative intensity. Other minor variations can occur depending on the silicon to aluminum ratio of the particular sample, as well as if it has previously been subjected to thermal treatment.

In order to more fully illustrate the nature of the invention and the manner of practicing same, the following non-limiting examples are presented.

The ZSM-20 starting material and the Pd/Mg/ZSM-20 catalyst were made in accord with procedures set forth in our aforesaid prior European Application, Examples 1 and 2 of which are reproduced below as Example 1 and 2. The catalyst was regenerated at 400°C for 16 hours in flowing 2.1% $H_2S$ and $H_2$ at atmospheric pressure.

Example 1
A mixture of
193.7 gm Tetraethylorthosilicate
7.9 gm Sodium Aluminate
291 ml 2.8N Tetraethylammonium hydroxide and
72 gm Water which gives the following mole ratios:

$SiO_2/Al_2O_3$ =30
$H_2O/SiO_2$ =15
$OH/SiO_2$ =0.90
$Na/SiO_2$ =0.09 and
$TEA/SiO_2$ =0.88

was aged for 3 days at 25°C in a 300 ml polypropylene bottle and then crystallized for an additional 18 days at 100°C under static conditions to give crystalline ZSM-20 in 90% purity with a $SiO_2/Al_2O_3$ mole ratio of 8.66.

Example 2
5% Pd/Mg/ZSM-20
The TEA, Na ZSM-20 was exchanged with 1 molar $MgCl_2$ at reflux overnight, washed until free of $Cl^-$, and air dried at 120°C. The magnesium exchanged ZSM-20 was then reslurried in distilled $H_2O$, an aqueous solution of $Pd(NH_4)_4Cl_2$ was added dropwise, stirred overnight at 40°C, washed free of $Cl^-$, air dried at 140°C, and then air calcined at 500°C for four hours. Elemental analysis of the calcined catalyst showed that Pd exchange was quantitative.

A product was obtained having the oxide composition:

5% Pd/Mg/ZSM-20

| | wt % | meq*/gm | |
|---|---|---|---|
| PdO | 6.2 | 1.0 | |
| MgO | 3.3 | 1.6 | } 3.24 |
| $Na_2O$ | 1.98 | 0.64 | |
| $SiO_2$ | 74.00 | | |
| $Al_2O_3$ | 14.50 | 2.84 | |
| $SiO_2/Al_2O_3$ =8.66 | | | |

*milliequivalents of ionic species per gram of dehydrated product

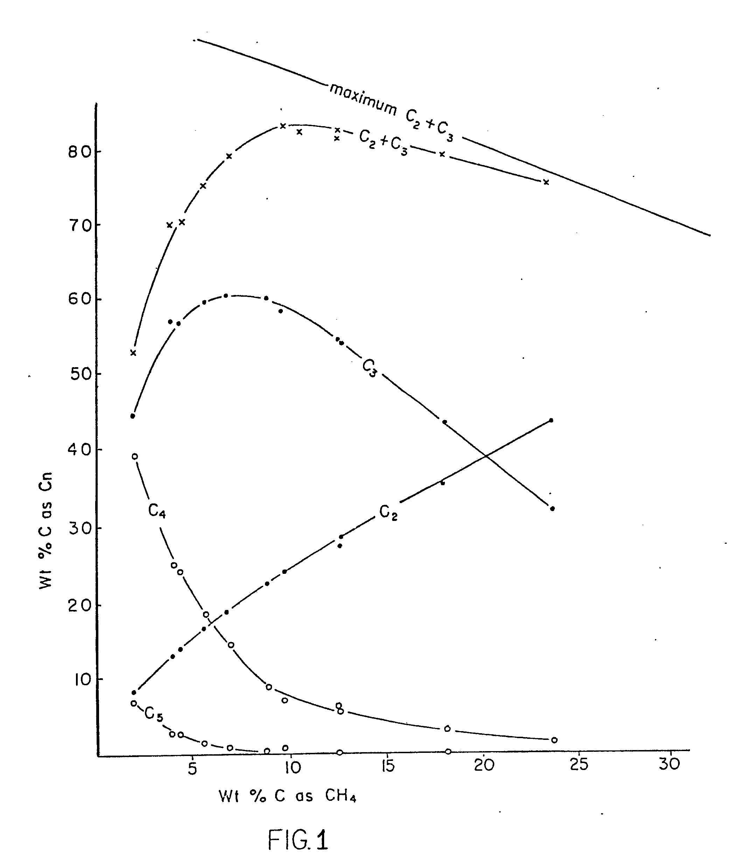

Figure 1 presents selectivity data obtained over the catalyst at 4238 kPa (600 psig), 1 LHSV, 1780 $NIH_2/1$ (10000 SCF $H_2$/BBL) and temperatures from 425—525°C, in the form of a plot of weight percentage C as methane in the product mixture against weight percentage C as other individual paraffins in the product mixture. It should be noted that in all cases conversion to $C_1$—$C_5$=100% and high selectivities to $C_2+C_3$ are obtained.

These data are compared to those presented in Example 1 and 12 of US—A—3,944,381 in Tables 2 and 3 respectively. These results show that even at twice the space velocity lower temperatures are required for the 5% PdMg ZSM-20 catalyst and selectivities to $C_2$ and $C_3$ are much higher.

The catalyst employed in Example 1 of U.S. 3,944,481 was prepared by successive impregnations of silica-alumina (25% alumina) with nickel nitrate, ammonium tungstate and hydrofluoric acid, followed by drying and calcination. That employed in Example 12 was similarly prepared, using rare earth exchanged zeolite Y(REY) in place of silica-alumina. Example 1 of 3,944,481 converted a 177—260°C gas oil at 550°C, 4238 kPa (600 psig) and 30:1 hydrogen/hydrocarbon mole ratio, while Example 12 converted a 143—363°C gas oil at 475°C, 4238 kPa (600 psig) and 28:1 hydrogen/hydrocarbon mole ratio.

TABLE 2

| | Ex. 1 (US—A—3,944,481) 6% Ni 19% W 2% F $SiO_2/Al_2O_3$ | Example 3 (Present Invention) 5% PdMg ZSM-20 |
|---|---|---|
| LHSV | 0.5 | 1.0 |
| $H_2CIRCNIH_2/I(SCF/BBL)$ | 2920(16400) | 1780(10000) |
| T(°C) | 550 | 454 |
| P kPa (psig) | 4238(600) | 4238(600) |
| $CH_4$ | 4.0 | 4.0 |
| $C_2H_6$ | 5.9 | 12.6 |
| $C_3H_8$ | 35.9 | 56.9 |
| $C_4H_{10}$ | 34.4 | 24.5 |
| $C_5H_{12}$ | 14.5 | 1.9 |
| $C_6$—$C_9$ | 5.3 | — |

## TABLE 3

|  | Ex. 12 (US—A—3,944,481) 6% Ni 19% W 2% F REY | Example 4 (Present Invention) 5% PdMg ZSM-20 |
|---|---|---|
| LHSV | 0.5 | 1.0 |
| H$_2$CIRCNIH$_2$/I(SCF/BBL) | 2850(16000) | 1780(10000) |
| T(°C) | 475 | 440 |
| P kPa (psig) | 4238(600) | 4238(600) |
| CH$_4$ | 3.1 | 3.1 |
| C$_2$H$_6$ | 7.7 | 10.5 |
| C$_3$H$_8$ | 40.3 | 51.7 |
| C$_4$H$_{10}$ | 33.1 | 30.7 |
| C$_5$H$_{12}$ | 10.0 | 4.0 |
| C$_6$—C$_9$ | 5.8 | — |

**Claims**

1. A process for producing light paraffins which comprises submitting a crude oil fraction boiling in the range 93°C to 538°C to hydrocracking at a pressure above 2859 kPa, a temperature of 300 to 565°C, a hydrogen/hydrocarbon mole ratio of 4:1 to 50:1 and a residence time of 1 to 180 seconds over a sulphided catalyst comprising a hydrogenation component and a Group IIA or IIIB form of zeolite ZSM-20, and recovering a C$_2$—C$_5$ alkane product.

2. A process according to Claim 1 wherein said C$_2$—C$_5$ alkane product is thermally cracked to ethylene and propylene.

3. A process according to Claim 1 or Claim 2 wherein the crude oil fraction is a gas oil boiling in the range 177 to 427°C.

4. A process according to any preceding claim wherein the hydrocracking is conducted at a hydrogen/hydrocarbon mole ratio of 10:1 to 30:1, a temperature of 450 to 550°C and a residence time of 5 to 50 seconds.

5. A process according to any preceding claim wherein the catalyst comprises the magnesium form of ZSM-20.

6. A process according to any preceding claim wherein the hydrogenation component is palladium.

**Patentansprüche**

1. Verfahren zur Herstellung von Leichtparaffinen, dadurch gekennzeichnet, daß man eine Rohölfraktion, die im Bereich von 93°C bis 538°C siedet, einem Hydrocracken bei einem Druck oberhalb 2 859 kPa, einer Temperatur von 300 bis 565°C, einem Wasserstoff/Kohlenwasserstoff-Molverhältnis von 4:1 bis 50:1 und einer Verweilzeit von 1 bis 180 sec über einem sulfidierten Katalysator, der eine Hydrierungskomponente und eine Gruppe IIA- oder Gruppe IIIB-Form von Zeolith ZSM-20 enthält, unterwirft und ein C$_2$—C$_5$-Alkan-Produkt gewinnt.

2. Verfahren nach Anspruch 1, dadurch gekennzeichnet, daß das C$_2$—C$_5$-Alkan-Produkt zu Äthylen und Propylen thermisch gecrackt wird.

3. Verfahren nach Anspruch 1 oder 2, dadurch gekennzeichnet, daß die Rohölfraktion ein Gasöl ist, welches im Bereich von 177 bis 427°C siedet.

4. Verfahren nach einem der vorhergehenden Ansprüche, dadurch gekennzeichnet, daß das Hydrocracken bei einem Wasserstoff/Kohlenwasserstoff-Molverhältnis von 10:1 bis 30:1, einer Temperatur von 450 bis 550°C und einer Verweilzeit von 5 bis 50 sec durchgeführt wird.

5. Verfahren nach einem der vorhergehenden Ansprüche, dadurch gekennzeichnet, daß der Katalysator die Magnesiumform von ZSM-20 enthält.

6. Verfahren nach einem der vorhergehenden Ansprüche, dadurch gekennzeichnet, daß die Hydrierungskomponente Palladium ist.

**Revendications**

1. Un procédé pour produire des paraffines légères qui consiste à soumettre une fraction de pétrole brut bouillant dans la gamme de 93°C à 538°C à un hydrocraquage à une pression supérieure à 2859 kPa, une température de 300 à 565°C un rapport molaire hydrogène/hydrocarbures de 4/1 à 50/1 et une durée de séjour de 1 à 180 s sur un catalyseur sulfuré comprenant un composant d'hydrogénation et une forme groupe IIA ou IIIB de la zéolite ZSM-20 et la récupération d'un produit constitué d'alcanes en C$_2$—C$_5$.

2. Un procédé selon la revendication 1 dans lequel ledit produit constitué d'alcanes en C$_2$—C$_5$ est craqué thermiquement en éthylène et en propylène.

3. Un procédé selon la revendication 1 ou la revendication 2 dans lequel la fraction de pétrole brut est un gasoil bouillant dans la gamme de 177 à 427°C.

4. Un procédé selon l'une quelconque des revendications précédentes dans lequel on effectue l'hydrocraquage avec un rapport molaire hydrogène/hydrocarbures de 10/1 à 30/1, une température de 450 à 550°C et une durée de séjour de 5 à 50 s.

5. Un procédé selon l'une quelconque des revendications précédentes dans lequel le catalyseur est constitué de la forme magnésium de la ZSM-20.

6. Un procédé selon l'une quelconque des revendications précédentes dans lequel le composant d'hydrogénation est le palladium.

FIG. 1